# EUROPÄISCHE PATENTSCHRIFT

(11) **EP 2 256 342 B1**
(45) Veröffentlichungstag und Bekanntmachung des Hinweises auf die Patenterteilung: **18.09.2013**
(21) Anmeldenummer: 09007124.2
(22) Anmeldetag: 28.05.2009
(51) Int. Cl.: F03D 7/02

(54) **Verfahren zur Notbremsung einer Windenergieanlage sowie Windenergieanlage mit einer Rotorblattverstellung zur Notbremsung**
Method for emergency braking of a wind energy plant and wind energy plant with a rotor blade adjustment for emergency braking
Procédé de freinage d'urgence d'une éolienne et éolienne dotée d'un réglage de pale de rotor pour le freinage d'urgence

(43) Veröffentlichungstag der Anmeldung: 01.12.2010
(73) Patentinhaber: Nordex Energy GmbH, 22848 Norderstedt (DE)
(72) Erfinder: Machold, Winulf, 22391 Hamburg (DE)
(74) Vertreter: Hauck Patent- und Rechtsanwälte

(56) Entgegenhaltungen:
- EP-A2- 1 701 034
- WO-A2-2009/010059
- DE-A1- 3 320 685
- DE-A1-102006 001 613

## Beschreibung

Die vorliegende Erfindung betrifft ein Verfahren zur Notbremsung einer Windenergieanlage, bei dem mindestens ein Rotorblatt der Windenergieanlage in seine Fahnenstellung verstellt wird. Die Erfindung betrifft ferner eine Windenergieanlage mit mindestens einem Rotorblatt und mindestens einer Rotorblattverstelleinrichtung, die für das mindestens eine Rotorblatt den Blatteinstellwinkel einstellen und ansprechend auf ein Steuersignal für eine Notbremsung das mindestens eine Rotorblatt in seine Fahnenstellung verstellen kann.

Der Blatteinstellwinkel des Rotorblatts wird als derjenige Winkel definiert, den die Sehne des Rotorblatts mit der Rotationsebene einschließt.

Die Fahnenstellung des Rotorblatts, auch gelegentlich als Segelstellung bezeichnet, ist diejenige Position des Rotorblatts, in der die Sehne des Rotorblatts etwa senkrecht zur Drehebene des Rotorblatts steht. In der Fahnenstellung ist entweder die Vorderkante oder die Hinterkante des Rotorblatts so in den Wind gedreht, dass kein Auftrieb mehr am Blattprofil entstehen kann.

Allgemein ist bekannt, die Rotorblätter einer Windenergieanlage auch während einer Notfahrt mit einer annähernd konstanten Geschwindigkeit in die Fahnenstellung zu bewegen.

Aus DE 33 20 685 C2 ist eine Vorrichtung zum Einstellen der Segelstellung des Blatts oder der Blätter einer Windturbine bekannt. Es wird beschrieben, dass die Einstellung der Segelstellung mit einer konstanten, hohen Geschwindigkeit zu einer übermäßigen Blattbeanspruchung aufgrund des beträchtlichen verzögernden (negativen) Drehmoments und des Umkehrschubs, der durch die Blätter entwickelt wird, führen kann. Es wird daher vorgeschlagen, beim Verfahren der Rotorblätter in die Segelstellung, nachdem der Blattwinkel bis zu einem Punkt vergrößert worden ist, in dem die Luftströmung über den Blättern nicht länger ein positives Drehmoment an dem Windturbinenrotor erzeugt, die Geschwindigkeit des Einstellens der Segelstellung zu reduzieren, um das verzögernde Drehmoment und den durch die Blätter entwickelten Umkehrschub zu minimieren und dadurch die Blattbeanspruchung zu minimieren. Es wird ferner darauf hingewiesen, dass aus Sicherheitsgründen die Reduzierung der Blatteinstellgeschwindigkeit, wenn sich die Blätter ihrer Segelstellung nähern, nicht auf Kosten der Einstellung der Segelstellung mit maximaler Geschwindigkeit erfolgen sollte, während die Luftströmung über den Blättern ein positives Wellendrehmoment erzeugt.

Aus DE 10 2005 034 899 A1 ist eine Windenergieanlage mit Einzelpitcheinrichtungen bekannt. Beim Verfahren des Rotorblatts in seine Fahnenstellung ist ein Selektor vorgesehen, der zu Beginn des Verfahrvorgangs ein Reglerregime auswählt, das eine hohe Verstellgeschwindigkeit für das Rotorblatt vorsieht. Zu einem Zeitpunkt t₂, ab dem das Rotorblatt einen kritischen Blattanstellwinkel θ₀ erreicht hat, wird eine niedrigere Verstellgeschwindigkeit für das Rotorblatt gewählt.

Aus EP 1 788 237 A2 ist ein Verfahren und eine Vorrichtung zur Bremsung einer Windenergieanlage bekannt. Hier ist vorgesehen, dass, wenn die Rotorblätter aus einer ersten Position in eine zweite Position verfahren werden, der Blatteinstellwinkel sich mit einer ersten Geschwindigkeit ändert und anschließend mit einer zweiten Geschwindigkeit verfahren wird, wobei die zweite Geschwindigkeit kleiner als die erste Geschwindigkeit ist.

Aus WO 2009/010059 A2 ist ein Verfahren zur Verstellung der Rotorblätter während des Stoppens des Rotors bekannt. Bei diesem Verfahren werden die Rotorblätter in eine Position verstellt, in der keine Schubkraft von dem Rotor aufgenommen wird. Anschließend wird bei vorliegender aerodynamischer Schubkraft der Rotor so gesteuert, dass die Schubkraft im Wesentlichen null ist oder der Bewegungsrichtung des Turms mit seiner ersten Eigenfrequenz entgegenwirkt.

Aus EP 1 701 034 A2 ist ein Verfahren zum Abstoppen des Rotors einer Windenergieanlage bekannt, bei dem das Rotorblatt während einer ersten Schwingungsphase I mit einer ersten Verstellgeschwindigkeit verfahren wird. In einer direkt daran anschließenden Phase II, in der der Mast der Windenergieanlage gegen den Wind geneigt ist, wird die Verstellgeschwindigkeit des Rotorblattes reduziert bis der Mast der Windenergieanlage seine maximale Amplitude gegen den Wind erreicht hat. In der nachfolgend mit dem Rückschwingen des Mastes beginnenden Phase III wird das Rotorblatt wieder mit der ersten Verstellgeschwindigkeit verfahren. Der Verstellvorgang spielt sich dabei innerhalb der ersten Sekunden ab.

Der Erfindung liegt die Aufgabe zu Grunde, bei der Notbremsung der Windenergieanlage die auftretenden Lasten an den Rotorblättern und den Rotorblattanschlüssen sowie die Turmkopfschwingungen zu reduzieren.

Die erfindungsgemäße Aufgabe wird durch ein Verfahren mit den Merkmalen aus Anspruch 1 gelöst. Ebenso wird die erfindungsgemäße Aufgabe durch eine Windenergieanlage mit den Merkmalen aus Anspruch 7 gelöst. Vorteilhafte Ausgestaltungen bilden den Gegenstand der Unteransprüche.

Das erfindungsgemäße Verfahren dient zur Notbremsung einer Windenergieanlage, bei dem mindestens ein Rotorblatt der Windenergieanlage in seine Fahnenstellung bewegt wird. Allgemein wirkt das Verstellen des Blatteinstellwinkels, der auch als Pitchwinkel bezeichnet wird, in die Fahnenstellung als aerodynamische Bremse und ist unabhängig von anderen Komponenten, um die Windenergieanlage in die Abschaltposition zu fahren. Bei dem erfindungsgemäßen Verfahren wird der Verstellvorgang, mit dem das Rotorblatt in seine Fahnenstellung gebracht wird, in eine erste Phase und in eine zweite Phase unterschieden. In der ersten Phase, die unmittelbar einsetzt, nachdem die Bewegung in die Fahnenstellung begonnen hat, wird das mindestens eine Rotorblatt mit einer ersten Geschwindigkeit verstellt. In der zweiten Phase, die zeitlich nach der ersten Phase folgt, sich aber nicht unmittelbar an die erste Phase anschließen muss, wird das mindestens eine Rotorblatt ab einem vorbestimmten ersten Blatteinstellwinkel mit einer zweiten Geschwindigkeit verstellt. Die zweite Geschwindigkeit wird bis zum Erreichen einer Maximalgeschwindigkeit und/oder bis zum Erreichen eines zweiten vorbestimmten Blatteinstellwinkels erhöht.

Erfindungsgemäß wird in der zweiten Phase die zweite Geschwindigkeit kontinuierlich oder schrittweise erhöht. Je nach Ausgestaltung der verwendeten Antriebe für die Rotorblattverstellung, kann es sich als vorteilhaft herausstellen, die zweite Geschwindigkeit in einzelnen Schritten zu erhöhen oder die zweite Geschwindigkeit kontinuierlich zu steigern. Um ruckartige Bewegungen bei der Erhöhung der Geschwindigkeit in einzelnen Schritten zu vermeiden, erweist es sich als vorteilhaft, die Beschleunigungswerte beim Übergang zu der höheren Geschwindigkeit zu modifizieren. Je größer die Differenz zwischen den Werten der aufeinander folgenden Schritte ist, desto geringer kann der Betrag der Beschleunigung gewählt werden.

Der Erfindung liegt die Erkenntnis zu Grunde, dass in der zweiten Phase der Notfahrt, da die Umdrehungsgeschwindigkeit von Rotor und Triebstrang bereits reduziert und am Rotorblatt nur noch ein geringer Auftrieb vorhanden ist, eine Erhöhung der Pitchgeschwindigkeit ohne gleichzeitige Erhöhung der Lasten an den Rotorblättern bzw. der Turmkopfschwingungen möglich ist. Ein besonderer Vorteil des erfindungsgemäßen Verfahrens besteht daher darin, dass in der ersten Phase, in der das Rotorblatt noch ein Moment aus dem Wind aufnimmt und somit starke Kräfte an diesem angreifen, eine Verstellung des Rotorblatts mit einer geringeren Geschwindigkeit erfolgen kann, als bisher aus dem Stand der Technik bekannt ist. Durch das erfindungsgemäße Verfahren können die an der Windenergieanlage und insbesondere die an den Rotorblättern und am Turmkopf angreifenden Kräfte reduziert werden, ohne die Zeitspanne zum Erreichen der Fahnenstellung zu vergrößern. Mit Einsetzen des Bremsvorgangs erhöhen sich das Schlagmoment am Blattanschluss sowie die Auslenkung des Turmkopfes. Es handelt sich dabei um gedämpfte Schwingungen, die nach Beendigung des Bremsvorgangs anhalten. Mit dem erfindungsgemäßen Verfahren können die Amplituden dieser Schwingungen deutlich verringert werden, insbesondere wirkt sich die geringe Verstellgeschwindigkeit in der ersten Phase als schwingungsdämpfend für die Turmkopfschwingung aus. Im Gegensatz zu EP 1 701 034 A2 wird bei dem erfindungsgemäßen Verfahren zunächst mit einer geringeren Geschwindigkeit verstellt und der Übergang in die zweite Phase erfolgt unabhängig von der Auslenkung des Turmkopfes.

In einer bevorzugten Ausgestaltung des erfindungsgemäßen Verfahrens ist die erste Geschwindigkeit, mit der das Rotorblatt in der ersten Phase verstellt wird, über die Dauer der ersten Phase konstant.

In einer bevorzugten Ausgestaltung liegt der erste vorbestimmte Blatteinstellwinkel in einem Bereich, ab welchem am Rotorblatt betragsmäßig niedrige Lasten auftreten, bevorzugt zwischen 30° und 50°.

In einer vorteilhaften Ausgestaltung des erfindungsgemäßen Verfahrens ist eine dritte Phase vorgesehen, die nach der ersten Phase und vor der zweiten Phase des Verstellvorgangs durchlaufen wird. Für die dritte Phase ist ein dritter vorbestimmter Blatteinstellwinkel definiert, der kleiner als der erste vorbestimmte Blatteinstellwinkel ist. Erreicht das Rotorblatt den dritten vorbestimmten Blatteinstellwinkel, so wird in der dritten Phase die Geschwindigkeit für das Verstellen des Rotorblatts abgesenkt. Durch diese Absenkung wird der an sich bekannten Tatsache Rechnung getragen, dass in einem Winkelbereich beim Verstellen des Rotorblatts ein negativer Rotorschub, also eine Umkehrung des Drehmoments, auftreten kann. Bevorzugt wird in dieser kritischen Phase für das Rotorblatt die anfängliche erste Verstellgeschwindigkeit abgesenkt. Zweckmäßigerweise wird in der dritten Phase das mindestens eine Rotorblatt mit einer konstanten Geschwindigkeit verstellt. Der dritte vorbestimmte Blatteinstellwinkel ist ungefähr 10° bis 20° kleiner als der erste vorbestimmte Blatteinstellwinkel, mit dem die zweite Phase des Verstellvorgangs beginnt.

Als zweckmäßig hat sich herausgestellt, vor Erreichen der Fahnenstellung die Geschwindigkeit für die Verstellung des Rotorblatts zu reduzieren, damit das Rotorblatt in der Fahnenstellung gestoppt werden kann, ohne hierdurch zu große Lasten in die Windenergieanlage und deren Turmkopf einzuleiten. Bevorzugt erfolgt diese Reduzierung der Verstellgeschwindigkeit des Rotorblatts ab der zweiten vorbestimmten Winkelposition, die höchstens um 10° kleiner als die Fahnenstellung ist.

Erfindungsgemäß wird die Aufgabe ebenfalls durch eine Windenergieanlage mit den Merkmalen gemäß Anspruch 7 gelöst.

Die erfindungsgemäße Windenergieanlage besitzt mindestens ein Rotorblatt und mindestens eine Rotorblattverstelleinrichtung, die für das mindestens eine Rotorblatt den Blatteinstellwinkel einstellen und die ansprechend auf ein Steuersignal für eine Notbremsung das mindestens eine Rotorblatt in seine Fahnenstellung verfahren kann. Fachsprachlich wird die Rotorblattverstelleinrichtung auch als Pitchsystem bezeichnet. Die erfindungsgemäße Rotorblattverstelleinrichtung verfährt das mindestens eine Rotorblatt in seine Fahnenstellung, wobei in einer ersten Phase das Rotorblatt mit einer ersten Geschwindigkeit verstellt und ab einem ersten vorbestimmten Blatteinstellwinkel das Rotorblatt in einer zweiten Phase mit einer zweiten Geschwindigkeit verstellt wird. Die Rotorblattverstelleinrichtung erhöht schrittweise oder kontinuierlich die zweite Geschwindigkeit bis zum Erreichen einer Maximalgeschwindigkeit und/oder bis zum Erreichen einer zweiten vorbestimmten Winkelposition. Die Rotorblattverstelleinrichtung führt das Verfahren zur Verstellung des Blatteinstellwinkels selbsttätig durch, wenn das Steuersignal an der Rotorblattverstelleinrichtung anliegt.

Erfindungsgemäß wählt die Rotorblattverstelleinrichtung in der ersten Phase eine konstante Geschwindigkeit und erhöht die zweite Geschwindigkeit in der zweiten Phase kontinuierlich oder schrittweise. Bei Erreichen der Maximalgeschwindigkeit wird diese dann beibehalten.

In einer bevorzugten Ausgestaltung liegt der erste vorbestimmte Blatteinstellwinkel in einem Bereich, ab welchem mit betragsmäßig niedrigeren Lasten zu rechnen ist, vorzugsweise zwischen 30° und 50°. Ist dieser erste vorbestimmte Blatteinstellwinkel beim Verstellen erreicht, schaltet die Rotorblattverstelleinrichtung in die zweite Phase um.

Zweckmäßigerweise ist für die Rotorblattverstelleinrichtung ab einem dritten vorbestimmten Blatteinstellwinkel, der kleiner als der erste vorbestimmte Blatteinstellwinkel ist, die Geschwindigkeit für die Verstellung des Rotorblatts in einer dritten Phase abgesenkt. In der dritten Phase, in der eine Umkehrung der an dem Rotorblatt angreifenden Momente erfolgen kann, wird das Rotorblatt mit einer Geschwindigkeit verstellt, die kleiner als die erste Geschwindigkeit in der ersten Phase ist.

Der dritte Blatteinstellwinkel ist bevorzugt 10° bis 20° kleiner als der erste Blatteinstellwinkel, so dass das Rotorblatt in der dritten Phase einen Winkelbereich von 10° bis 20° mit der dritten Verstellgeschwindigkeit durchläuft.

Bevorzugt reduziert die Rotorblattverstelleinrichtung die Geschwindigkeit des Rotorblatts ab Erreichen eines zweiten vorbestimmten Blatteinstellwinkels, der nahe der Fahnenstellung liegt.

Die Erfindung wird nachfolgend durch drei Ausführungsbeispiele näher erläutert. Es zeigen:
- Figur 1: ein Ablaufdiagramm zu einem Bremsverfahren nach dem Stand der Technik,
- Figuren 2a, b: die Blatteinstellgeschwindigkeit und den Blatteinstellwinkel über der Zeit bei einem Bremsverfahren nach dem Stand der Technik,
- Figur 3: ein Ablaufdiagramm zu einem Bremsverfahren in einer ersten Ausführungsform des erfindungsgemäßen Verfahrens,
- Figuren 4a, b: die Blatteinstellgeschwindigkeit und den Blatteinstellwinkel über der Zeit in einer ersten Ausführungsform des erfindungsgemäßen Verfahrens,
- Figur 5: ein Ablaufdiagramm zu einem Bremsverfahren in einer zweiten Ausführungsform des erfindungsgemäßen Verfahrens und
- Figuren 6a, b: die Blatteinstellgeschwindigkeit und den Blatteinstellwinkel über der Zeit in einer zweiten Ausführungsform des erfindungsgemäßen Verfahrens.

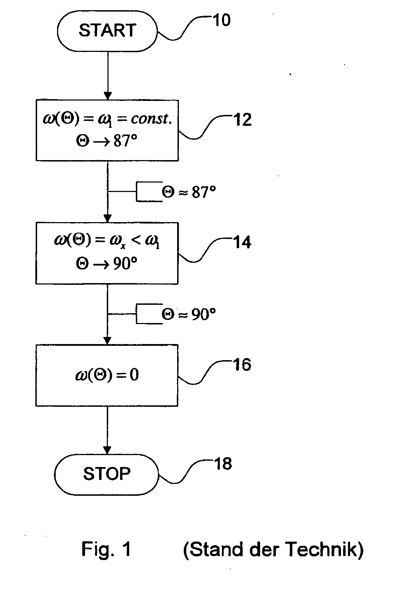

Figur 1 zeigt ein Ablaufdiagramm für ein Bremsverfahren nach dem Stand der Technik. Ansprechend beispielsweise auf ein Signal für eine Notbremsung wird das Bremsprogramm in Schritt 10 gestartet. In einem Schritt 12 wird das Rotorblatt mit konstanter Winkelgeschwindigkeit ω₁ in Richtung Fahnenstellung verstellt. Ab einem Blatteinstellwinkel Θ von annähernd 87° erfolgt die Verstellung des Rotorblatts bis zum Erreichen der Fahnenstellung gemäß Schritt 14 mit einer geringeren Winkelgeschwindigkeit ωₓ<ω₁. Nach Erreichen der Endposition des Rotorblattes bei annähernd 90° wird die Winkelgeschwindigkeit ω in Schritt 16 auf den Wert 0 gesenkt und das Bremsprogramm in Schritt 18 beendet.

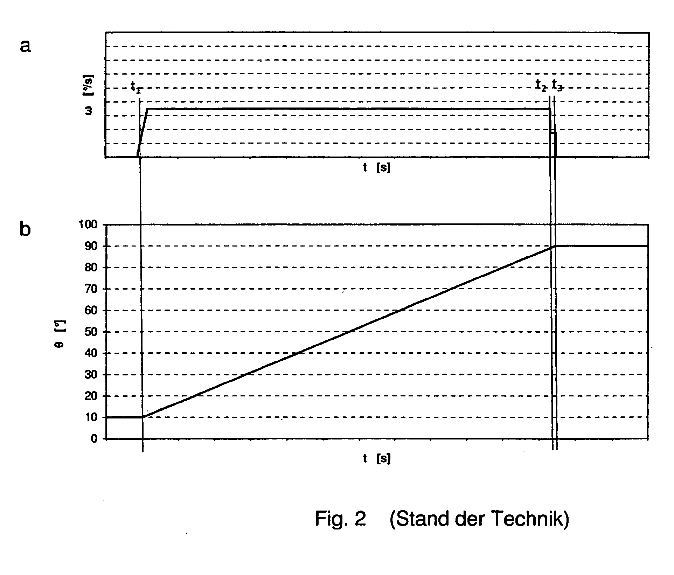

Die Figuren 2 a und b zeigen den zeitlichen Verlauf der Blatteinstellgeschwindigkeit ω und des Blatteinstellwinkels Θ nach dem in Figur 1 beschriebenen Verfahren. Es wird ein stationärer Wind und eine leichte Schräganströmung von 8° angenommen. Die Windenergieanlage befindet sich im Produktionsbetrieb bei Nennleistung, wobei der Blatteinstellwinkel Θ ungefähr 10° beträgt. Zum Zeitpunkt t₁ erfolgt ein Lastabwurf und die Generatordrehzahl erhöht sich auf einen Wert deutlich über der Nenndrehzahl. Dieser Drehzahlanstieg löst das Bremsprogramm aus. Das Rotorblatt wird mit einer konstanten Winkelgeschwindigkeit ω¹ verstellt. Zum Zeitpunkt t₂ erreicht das Rotorblatt einen Einstellwinkel Θ von annähernd 87°. Danach wird die Winkelgeschwindigkeit ω auf einen Wert ωₓ kleiner als ω₁ gesenkt. Mit Erreichen der Fahnenstellung zum Zeitpunkt t₃ sinkt die Winkelgeschwindigkeit auf den Wert ω =0.

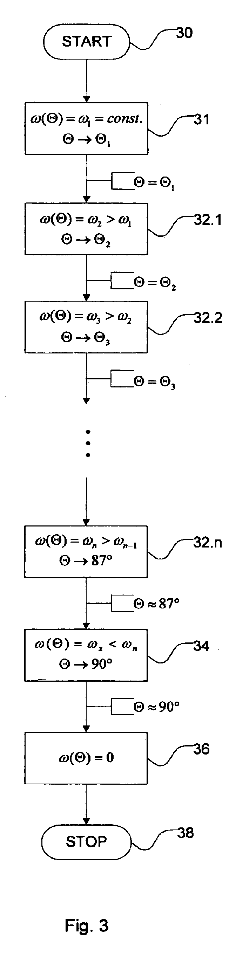

Figur 3 zeigt ein Ablaufdiagramm für das erfindungsgemäße Verfahren. In Schritt 30 wird das Bremsprogramm gestartet. Dies kann beispielsweise ansprechend auf ein Signal für eine Notbremsung erfolgen. Das Rotorblatt wird mit einer konstanten Winkelgeschwindigkeit ω₁ bis zum Erreichen einer ersten definierten Winkelposition Θ₁ in Richtung Fahnenstellung gefahren. In den folgenden Schritten 32.1 bis 32.n wird die Winkelgeschwindigkeit ω schrittweise erhöht (ω= ω₂, ω₃, ..., ωₙ). Ab einem Blatteinstellwinkel Θ von annähernd 87° erfolgt die Verstellung des Rotorblatts bis zum Erreichen der Fahnenstellung gemäß Schritt 34 mit einer geringeren Winkelgeschwindigkeit ωₓ. Nach Erreichen der Endposition des Rotorblattes bei annähernd 90° wird die Winkelgeschwindigkeit ω in Schritt 36 auf den Wert 0 gesenkt und das Bremsprogramm in Schritt 38 beendet.

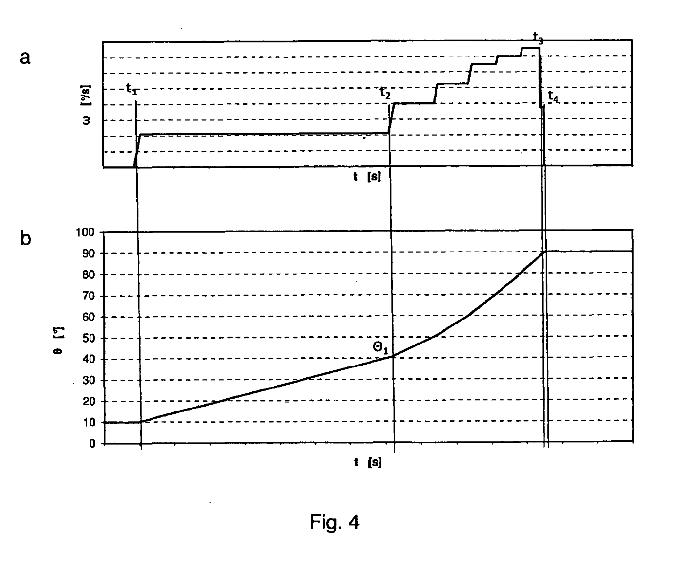

Die Figuren 4 a und b zeigen den zeitlichen Verlauf der Blatteinstellgeschwindigkeit ω und des Blatteinstellwinkels Θ nach dem in Figur 3 beschriebenen Verfahren. Es werden die gleichen Randbedingungen wie im Beispiel aus dem Stand der Technik angenommen. Zum Zeitpunkt t₁ wird das Bremsprogramm ausgelöst. Das Rotorblatt wird mit einer ersten konstanten Winkelgeschwindigkeit ω₁ verstellt. Ab Erreichen eines vorbestimmten Blatteinstellwinkels Θ₁ zum Zeitpunkt t₂ wird die Winkelgeschwindigkeit ω schrittweise erhöht (ω= ω₂, ω₃, ..., ωₙ). Zum Zeitpunkt t₃ erreicht das Rotorblatt einen Einstellwinkel Θ von annähernd 87°. Danach wird die Winkelgeschwindigkeit U1 auf einen Wert ωₓ kleiner als ωₙ abgesenkt. Mit Erreichen der Fahnenstellung zum Zeitpunkt t₄ sinkt die Winkelgeschwindigkeit auf den Wert ω =0.

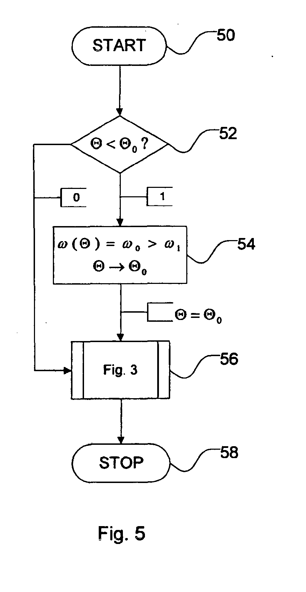

Figur 5 zeigt ein Ablaufdiagramm für eine erweiterte Variante des erfindungsgemäßen Verfahrens. Im gezeigten Beispiel wird das Bremsprogramm in Schritt 50 gestartet. In Schritt 52 erfolgt eine Abfrage des aktuellen Blatteinstellwinkels Θ. Ist der Wert des aktuellen Blatteinstellwinkels Θ größer oder gleich einem vorgegebenen Blatteinstellwinkel Θ₀ läuft das Bremsprogramm nach dem erfindungsgemäßen Verfahren gemäß Schritt 56 ab. Ist der aktuelle Blatteinstellwinkel θ kleiner als der vorgegebene Blatteinstellwinkel Θ₀ wird das Blatt in Schritt 54 mit einer Winkelgeschwindigkeit ω₁₀ verstellt, wobei ω₁₀ größer als die Winkelgeschwindigkeit ω₁ ist, mit der das erfindungsgemäße Bremsprogramm gestartet wird. Der Betrag der Winkelgeschwindigkeit ω₁₀ kann konstant sein oder schrittweise verringert werden. Ab Erreichen eines vorgegebenen Blatteinstellwinkels Θ₀ wird das Bremsprogramm in Schritt 56 mit dem erfindungsgemäßen Verfahren fortgeführt und nach Erreichen der Fahnenstellung in Schritt 58 beendet.

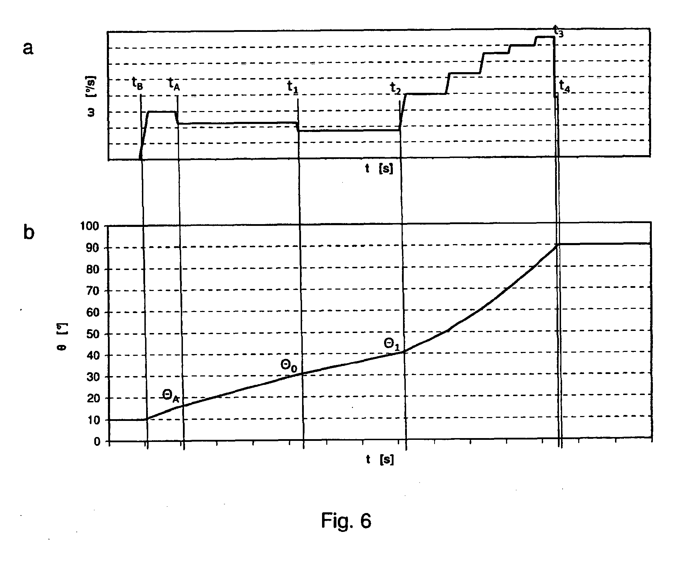

Die Figuren 6 a und b zeigen den zeitlichen Verlauf der Blatteinstellgeschwindigkeit ω und des Blatteinstellwinkels Θ nach dem in Figur 5 beschriebenen Verfahren. Es werden wiederum die gleichen Randbedingungen wie im Beispiel aus dem Stand der Technik angenommen. Die Windenergieanlage befindet sich im Produktionsbetrieb bei Nennleistung, wobei der Blatteinstellwinkel Θ ungefähr 10° beträgt. Zum Zeitpunkt t_{B} trifft eine Böe auf die Windenergieanlage und das Rotorblatt wird zur Anpassung der Drehzahl auf einen Blatteinstellwinkel Θ_{A} verstellt. Zum Zeitpunkt t_{A} erfolgt ein Lastabwurf und die Generatordrehzahl erhöht sich auf einen Wert über der Nenndrehzahl. Dieser Drehzahlanstieg löst das Bremsprogramm aus. Da zu diesem Zeitpunkt t_{A} der aktuelle Blatteinstellwinkel Θ_{A} kleiner als der vorgegebene Blatteinstellwinkel Θ₀ ist, wird das Rotorblatt mit einer ersten konstanten Winkelgeschwindigkeit Θ₀ verstellt. Nach Erreichen des Blatteinstellwinkels Θ₀ wird das Bremsprogramm entsprechend dem bereits beschriebenen erfindungsgemäßen Verfahren fortgeführt. Das Rotorblatt wird mit einer zweiten konstanten Winkelgeschwindigkeit ω₁ verstellt, wobei ω₁<ω₀. Ab Erreichen eines vorbestimmten Blatteinstellwinkels Θ₁ wird die Winkelgeschwindigkeit ω schrittweise erhöht (ω= ω ₂, ω₃, ..., ωₙ). Zum Zeitpunkt t₃ erreicht das Rotorblatt einen Einstellwinkel Θ von annähernd 87°. Danach wird die Winkelgeschwindigkeit auf ωₓ abgesenkt. Mit Erreichen der Fahnenstellung zum Zeitpunkt t₄ sinkt die Winkelgeschwindigkeit auf den Wert ω=0.

## Patentansprüche

1. Verfahren zur Notbremsung einer Windenergieanlage, bei dem mindestens ein Rotorblatt der Windenergieanlage in seine Fahnenstellung verstellt wird, das Verfahren folgendes aufweisend:
- eine erste Phase, in der das mindestens eine Rotorblatt mit einer ersten Geschwindigkeit (ω₁) verstellt wird, und
- eine zweite Phase, in der das mindestens eine Rotorblatt ab einem vorbestimmten ersten Blatteinstellwinkel (Θ₁) unabhängig von einer Auslenkung eines Turmkopfes der Windenergieanlage mit einer zweiten Geschwindigkeit (ω₂, ω₃ ...) verstellt wird,
**dadurch gekennzeichnet, dass** die zweite Geschwindigkeit (ω₂, ω₃ ...) größer als die erste Geschwindigkeit(ω₁) ist und bis zum Erreichen einer Maximalgeschwindigkeit und/oder bis zum Erreichen eines vorbestimmten zweiten Blatteinstellwinkels (Θ₂) kontinuierlich oder schrittweise erhöht wird.

2. Verfahren nach Anspruch 1, **dadurch gekennzeichnet, dass** in der ersten Phase die erste Geschwindigkeit (ω₁) konstant ist.

3. Verfahren nach einem der Ansprüche 1 oder 2, **dadurch gekennzeichnet, dass** der vorbestimmte erste Blatteinstellwinkel (Θ₁) in einem Bereich liegt, in welchem betragsmäßig niedrigere Lasten am Rotorblatt auftreten als zu Beginn des Verstellvorgangs.

4. Verfahren nach einem der Ansprüche 1 bis 3, **dadurch gekennzeichnet, dass** der vorbestimmte erste Blatteinstellwinkel (Θ₁) einen Wert von 30° bis 50° aufweist.

5. Verfahren nach einem der Ansprüche 1 bis 4, **dadurch gekennzeichnet, dass** ab einem vorbestimmten dritten Blatteinstellwinkel (Θ₃), der kleiner als der vorbestimmte erste Blatteinstellwinkel (Θ₁) ist, die Geschwindigkeit für das Verstellen des Rotorblatts in einer dritten Phase abgesenkt wird.

6. Verfahren nach Anspruch 5, **dadurch gekennzeichnet, dass** der vorbestimmte dritte Blatteinstellwinkel (Θ₃) um 10° bis 20° kleiner als der vorbestimmte erste Blatteinstellwinkel (Θ₁) ist.

7. Windenergieanlage mit mindestens einem Rotorblatt und mindestens einer Rotorblattverstelleinrichtung, die für das mindestens eine Rotorblatt den Blatteinstellwinkel (Θ) einstellen und die ansprechend auf ein Steuersignal für eine Notbremsung das mindestens eine Rotorblatt in seine Fahnenstellung verstellen kann, wobei die Rotorblattverstelleinrichtung bei einem Verstellen des mindestens einen Rotorblatts in seine Fahnenstellung in einer ersten Phase das Rotorblatt mit einer ersten Geschwindigkeit (ω₁) verstellt und ab einem vorbestimmten ersten Blatteinstellwinkel (Θ₁) das Rotorblatt unabhängig von einer Auslenkung eines Turmkopfes der Windenergieanlage in einer zweiten Phase mit einer zweiten Geschwindigkeit (ω₂, ω₃ ...) verstellt, **dadurch gekennzeichnet, dass** die zweite Geschwindigkeit (ω₂, ω₃ ...) größer als die erste Geschwindigkeit (ω₁) ist und bis zum Erreichen einer Maximalgeschwindigkeit und/oder bis zum Erreichen eines vorbestimmten zweiten Blatteinstellwinkels (Θ₂) kontinuierlich oder schrittweise erhöht wird.

8. Windenergieanlage nach Anspruch 7, **dadurch gekennzeichnet, dass** in der ersten Phase die erste Geschwindigkeit (ω₁) konstant ist.

9. Windenergieanlage nach einem der Ansprüche 7 bis 8, **dadurch gekennzeichnet, dass** der vorbestimmte erste Blatteinstellwinkel (Θ₁) in einem Bereich liegt, ab welchem mit betragsmäßig niedrigen Lasten am Rotorblatt zu rechnen ist, insbesondere zwischen 30° und 50°.

10. Windenergieanlage nach einem der Ansprüche 7 bis 9, **dadurch gekennzeichnet, dass** die Rotorblattverstelleinrichtung ab einem vorbestimmten dritten Blatteinstellwinkel (Θ₃), der kleiner als der vorbestimmte erste Blatteinstellwinkel (Θ₁) ist, die Geschwindigkeit für die Verstellung des Rotorblatts in einer dritten Phase absenkt.

11. Windenergieanlage nach Anspruch 10, **dadurch gekennzeichnet, dass** in der dritten Phase eine konstante Geschwindigkeit vorliegt.

12. Windenergieanlage nach Anspruch 10 oder 11, **dadurch gekennzeichnet, dass** der vorbestimmte dritte Blatteinstellwinkel (Θ₃) um 10° bis 20° kleiner als der vorbestimmte erste Blatteinstellwinkel (Θ₁) ist.

13. Windenergieanlage nach einem der Ansprüche 7 bis 12, **dadurch gekennzeichnet, dass** die Rotorblattverstelleinrichtung bei Erreichen des vorbestimmten zweiten Blatteinstellwinkels (Θ₂) die Geschwindigkeit reduziert.

## Claims

1. A method for the emergency braking of a wind turbine, in which at least one rotor blade of the wind turbine is adjusted into its feathering position, said method comprising:
- a first phase, in which the at least one rotor blade is adjusted with a first speed (ω₁), and
- a second phase, in which the at least one rotor blade is adjusted as of a predetermined first blade pitch angle (θ₁) independently of a deflection of the head of the tower of the wind turbine with a second speed (ω₂, ω₃...) **characterized in that** the second speed (ω₂, ω₃...) is higher than the first speed (ω₁) and is increased continuously or gradually until a maximum speed is reached and/or until a predetermined second blade pitch angle (θ₂) is reached.

2. The method according to claim 1, **characterized in that** the first speed (ω₁) is constant in the first phase.

3. The method according to claim 1 or 2, **characterized in that** the predetermined first blade pitch angle (θ₁) lies inside a range, in which there are lower loads on the rotor blade than at the beginning of the adjustment process.

4. The method according to one of claims 1 to 3, **characterized in that** the predetermined first blade pitch angle (θ₁) has a value of 30° to 50°.

5. The method according to one of claims 1 to 4, **characterized in that** as of a predetermined third blade pitch angle (θ₃), which is smaller than the predetermined first blade pitch angle (θ₁), the speed for the adjustment of the rotor blade is reduced in a third phase.

6. The method according to claim 5, **characterized in that** the predetermined third blade pitch angle (θ₃) is 10° to 20° smaller than the predetermined first blade pitch angle (θ₁).

7. A wind turbine comprising at least one rotor blade and at least one blade pitch control system, which can set the blade pitch angle (θ) for the at least one rotor blade and can adjust the at least one rotor blade into its feathering position upon receipt of a control signal for an emergency braking, wherein the blade pitch control system adjusts the rotor blade with a first speed (ω₁) during an adjustment of the at least one rotor blade into its feathering position in a first phase and as of a predetermined first blade pitch angle (θ₁) adjusts the rotor blade independently of a deflection of the head of the tower of the wind turbine in a second phase with a second speed (ω₂, ω₃...) **characterized in that** the second speed (ω₂, ω₃...) is higher than the first speed (ω₁) and is increased continuously or gradually until a maximum speed is reached and/or a predetermined second blade pitch angle (θ₂) is reached.

8. The wind turbine according to claim 7, **characterized in that** the first speed (ω₁) is constant in the first phase.

9. The wind turbine according to claim 7 or 8, **characterized in that** the predetermined first blade pitch angle (θ₁) lies inside a range, as of which there arc lower loads on the rotor blade, in particular between 30° and 50°.

10. The wind turbine according to one of claims 7 to 9, **characterized in that** the blade pitch control system as of a predetermined third blade pitch angle (θ₃), which is smaller than the predetermined first blade pitch angle (θ₁), reduces the speed for the adjustment of the rotor blade in a third phase.

11. The wind turbine according to claim 10, **characterized in that** there is a constant speed in the third phase.

12. The wind turbine according to claim 10 or 11, **characterised in that** the predetermined third blade pitch angle (θ₃) is 10° to 20° smaller than the predetermined first blade pitch angle (θ₁).

13. The wind turbine according to one of claims 7 to 12, **characterized in that** the blade pitch control system reduces the speed when the predetermined second blade pitch angle (θ₂) is reached.

## Revendications

1. Procédé de freinage d'urgence d'une éolienne, dans lequel au moins une pale de rotor de l'éolienne est déplacée pour être mise en drapeau, le procédé présentant les étapes suivantes :
- une première phase dans laquelle au moins une pale de rotor est déplacée à une première vitesse (ω₁), et
- une deuxième phase dans laquelle au moins une pale de rotor est déplacée à une deuxième vitesse (ω₂, ω₃...) à partir d'un premier angle de réglage de pale (Θ₁) prédéfini, indépendamment d'une déviation d'une tête de tour de l'éolienne,
**caractérisé en ce que** la deuxième vitesse (ω₂, ω₃...) est plus élevée que la première vitesse (ω₁) et est augmentée en continu ou bien graduellement jusqu'à l'obtention d'une vitesse maximale et/ou jusqu'à l'obtention d'un deuxième angle de réglage de pale (Θ₂) prédéfini.

2. Procédé selon la revendication 1, **caractérisé en ce que** la première vitesse (ω₁) est constante dans la première phase.

3. Procédé selon la revendication 1 ou 2, **caractérisé en ce que** le premier angle de réglage de pale (Θ1) prédéfini se situe dans une plage dans laquelle il apparaît des charges quantitativement plus faibles sur la pale de rotor qu'au début de processus de déplacement.

4. Procédé selon une des revendications 1 à 3, **caractérisé en ce que** le premier angle de réglage de pale (Θ₁) prédéfini présente une valeur de 30° à 50°.

5. Procédé selon une des revendications 1 à 4, **caractérisé en ce que**, à partir d'un troisième angle de réglage de pale (Θ₃) prédéfini qui est plus petit que le premier angle de réglage de pale (Θ₁) prédéfini, la vitesse du déplacement de la pale de rotor est abaissée dans une troisième phase.

6. Procédé selon la revendication 5, **caractérisé en ce que** le troisième angle de réglage de pale (Θ₃) prédéfini est inférieur de 10° à 20° au premier angle de réglage de pale (Θ₁) prédéfini.

7. Eolienne avec au moins une pale de rotor et au moins un dispositif de déplacement de pale de rotor qui peut régler pour au moins une pale de rotor l'angle de réglage de pale (Θ) et qui, en réaction à un signal de commande pour un freinage d'urgence, peut déplacer au moins une pale de rotor pour la mettre en drapeau, le dispositif de déplacement de pale de rotor déplaçant, dans une première phase, la pale de rotor à une première vitesse (ω₁) lors de la mise en drapeau de la pale de rotor au moins au nombre de un et, à partir d'un premier angle de réglage de pale (Θ₁) prédéfini, déplaçant, dans une deuxième phase, à une deuxième vitesse (ω₂, ω₃...) la pale de rotor indépendamment d'une déviation d'une tête de tour de l'éolienne, **caractérisée en ce que** la deuxième vitesse (ω₂, ω₃...) est plus élevée que la première vitesse (ω₁) et est augmentée en continu ou bien graduellement jusqu'à l'obtention d'une vitesse maximale et/ou jusqu'à l'obtention d'un deuxième angle de réglage de pale (Θ₂) prédéfini.

8. Eolienne selon la revendication 7, **caractérisée en ce que** la première vitesse (ω₁) est constante dans la première phase.

9. Eolienne selon la revendication 7 ou 8, **caractérisée en ce que** le premier angle de réglage de pale (Θ₁) prédéfini se situe dans une plage à partir de laquelle il faut s'attendre à des charges quantitativement plus faibles sur la pale de rotor, en particulier entre 30° et 50°.

10. Eolienne selon une des revendications 7 à 9, **caractérisée en ce que** le dispositif de déplacement de pale de rotor, à partir d'un troisième angle de réglage de pale (Θ₃) prédéfini qui est plus petit que le premier angle de réglage de pale (Θ₁) prédéfini, abaisse la vitesse de déplacement de la pale de rotor dans une troisième phase.

11. Eolienne selon la revendication 10, **caractérisée en ce que**, dans la troisième phase, on est en présence d'une vitesse constante.

12. Eolienne selon la revendication 10 ou 11, **caractérisée en ce que** le troisième angle de réglage de pale (Θ₃) prédéfini est inférieur de 10° à 20° au premier angle de réglage de pale (Θ₁) prédéfini.

13. Eolienne selon une des revendications 7 à 12, **caractérisée en ce que** le dispositif de déplacement de pale de rotor réduit la vitesse lors de l'obtention du deuxième angle de réglage de pale (Θ₂) prédéfini.
